# EUROPEAN PATENT APPLICATION

(11) **EP 2 568 308 A1**
(43) Date of publication of application: **13.03.2013**
(21) Application number: 11180812.7
(22) Date of filing: 09.09.2011
(51) Int. Cl.: G01S 3/808, G01S 5/22

(54) **An acoustic monitoring system and a method of acoustic monitoring**

(71) Applicant: Nederlandse Organisatie voor toegepast- natuurwetenschappelijk onderzoek TNO, 2628 VK Delft (NL)
(72) Inventor: Fillinger, Laurent, 2628 VK Delft (NL); Zampolli, Mario, 2628 VK Delft (NL)
(74) Representative: Jansen, Cornelis Marinus

(57) **Abstract**

The invention relates to an acoustic monitoring system comprising at least two isolated acoustic receivers (101a, 101b), such as hydrophones, for receiving acoustic signals from an acoustic source (16) and capable of spatial displacement, a detector for detecting signals from the said receivers and a processing system (110) for processing the detected signals for determining a spatial position of the said receivers and/or a direction to the acoustic source (16). The invention further relates to a method of acoustic monitoring.

## Description

### FIELD OF THE INVENTION

The invention relates to an acoustic monitoring system.

The invention further relates to a method of acoustic monitoring.

### BACKGROUND OF THE INVENTION

Acoustic monitoring systems are widely applicable in the field of underwater acoustics. Typical applications of underwater acoustics include detection and localization of underwater and surface targets, such as submarines or ships, using active or passive sonars.

In case of active sonars, an acoustic source may be used to radiate acoustic energy that propagates under water until it is reflected back by a target. Measurement and processing of the reflected signals allows to estimate the target position.

With passive sonars one uses the acoustic waves that are generated by the target itself, after which the direction or position of the target is estimated based on the detected signals.

It will be appreciated that in the field of acoustics one differentiates between the near field and the far field. In the far field, when the acoustic source is at a distance significantly larger than the size of a detector and a wavelength of the acoustic signal used for detection, suitable estimation of the direction of arrival of the received acoustic signals may be accomplished using an array of omnidirectional hydrophones. An omnidirectional hydrophone is not sensitive to the direction of arrival of the acoustic waves. However, the acoustic energy may reach the proximal hydrophone earlier than a distal hydrophone. Based on the difference in the time arrival the source direction or position may be obtained.

For example, various processing techniques, such as generalized cross-correlation or beam forming may be used to estimate the direction of a signal incident on an array of hydrophones. These techniques use a-priori knowledge on the position of the hydrophones which does not vary in time.

It is a disadvantage of the known method using the omnidirectional hydrophones that errors in hydrophone positions substantially degrade the accuracy of direction and position estimation. It will be appreciated that such errors may occur due to sudden displacements of the hydrophones in x, y, z.

Accordingly, in order to avoid errors due to position uncertainty of the hydrophones, the hydrophones forming the acoustic measurement system are rigidly attached to a non-displaceable frame. As a result, the relative position of the hydrophones is constant.

However, when the hydrophones are arranged on a flexible cable, their relative position may vary substantially causing errors in the determination of the direction and the position of the target.

Another approach to determine a position of an acoustic source is to use several passive hydrophone systems, which may be drifting in the near field.

For example, an array of the hydrophones may be suitably deployed around an expected position of the target. The time difference of arrival of the signal on the various hydrophones forming the array is measured and is used for localizing in the near field. This measurement is based on a comparison of the signals recorded by the various single hydrophone systems, which requires transmission of the recorded signals to a common location where the time difference measurement is performed. This transmission is usually performed using radio transmission. The target position is determined as the intersection of hyperbola that are parameterized by the measured delay and whose foci are located at the location of the hydrophones. Sonobuoys, for example, are operable using this principle.

In the near field, it is not required that the hydrophone position is known with an uncertainty smaller than the wavelength of the acoustic waves: the accuracy of the source position determination can be comparable to the accuracy of the hydrophone position.

Summarizing, in the underwater acoustic localization, the far-field source can be located when the hydrophone positions are known with high accuracy, whereas the near-field sources may be located using sparse networks of single hydrophones that require radio transmission of the recorded signals, which can be disadvantageous.

### SUMMARY OF THE INVENTION

It is an object of the invention to provide a system for enabling acoustic monitoring, wherein localization of the acoustic sources and determination of the direction or position of the acoustic sources do not require radio transmission of the recorded signals or accurate knowledge of the hydrophone positions.

To this end the system according to the invention comprises at least two isolated acoustic receivers for receiving acoustic signals from an acoustic source, such as hydrophones capable of spatial displacement, a detector for detecting signals from the said receivers and a processing system for processing the detected signals for determining the actual spatial position of the said receivers.

It is found that provided that a pair of suitable acoustic receivers, such as hydrophones, may be used for detecting acoustic events based on which estimation of the time difference of arrival (TDOA) of the acoustic signals can be measured. The TDOA can be used for determination of the direction or position of the detected acoustic events.

The system according to the invention is adapted to detect acoustic sources and to provide information on their position. The information that can be provided is the direction if the source is in the far field, or the position (i.e. the direction and the range) if the source is in the field.

Accordingly, in the invention the position of the displaceable receivers is tracked. It will be appreciated that the receivers may displace in space as such and may also displace with respect to each other.

The tracked position of the receivers allows to use their actual positions rather than their assumed positions (or assumed dwell positions) for accurate determination of the parameters of the acoustic source, such as its direction and its position. This results in improved accuracy and reliability of the system of the invention.

The receivers are preferably provided with means to measure their position. These means to measure the receiver positions may be achieved by processing of the detected signals or using respective associated position measuring devices. For example, suitable motion sensors, accelerometers or acoustic beacons may be used. The signals form the motion detectors, accelerometers or acoustic beacons may be used for determining the actual position of the receivers, which may constantly change with time. It is found that when the receivers are provided means to measure their positions, determination of the direction or position of the acoustic source may be carried out with high accuracy even for the mutually displacing receivers.

In an embodiment of the system according to the invention the at least two isolated acoustic receivers form a flexible structure. For example, the at least two isolated acoustic receivers are mounted on a cable. It is possible that the receivers are hanging in the water using suitable cables attached to surface or underwater floats. Alternatively, the receivers may be arranged on suitable cables which are moored at the bottom and which are preferably kept in tension using surface or underwater floats.

It is found to be preferable to provide a limiter cooperating with such cabling used for arranging the receivers so that the spatial displacement of the receivers in x, y, z is limited. Although receiver displacement can be tolerated, it is found to be advantageous to limit the spatial displacement of the receivers.

In a still further embodiment of the system according to the invention the processing system is adapted to address a motion model representative of the said spatial displacement.

This embodiment has an advantage that the spatial displacement of the individual receivers may be anticipated based on the pre-stored motion model. For example, periodic displacements or precessions may be predicted and calculated using the motion model. It will be appreciated that a plurality of motion models may be used in dependence on the configuration of the receiver, its mass and the way it is fixed. It will be further appreciated that the motion models may be calibrated for different weather conditions, for example. In this way fluctuations in the direct vicinity of the receivers, such as waves, streams, winds and so forth can be taken into consideration.

In a still further embodiment of the system according to the invention it comprises at least three isolated acoustic receivers.

It is found that provided that the three receivers are not aligned, ambiguities in determination of the direction of the acoustic source may be resolved with a higher accuracy compared to a two-receiver configuration.

In a still further embodiment of the system according to the invention it further comprises a tracker for recording the determined actual spatial positions of the receivers.

It is found to be advantageous to provide a tracker for recording the actual positions of the receivers to facilitate estimation of actual deviation of the receivers from their respective rest positions. Accordingly, suitable correction factors may be readily provided and used for determining the direction of the acoustic source.

The method of acoustic monitoring according to the invention uses a system comprising at least two isolated acoustic receivers capable of spatial displacement, wherein the method comprises the steps of:
- generating signals by the said receivers pursuant to detected acoustic signals;
- processing the generated signals for determining a spatial position of the said receivers.

In an embodiment of the method according to the invention the thus determined actual positions of the receivers, such as hydrophones, is used for determining the direction and/or the position of the acoustic source. In a further embodiment of the method according to the invention the generated signals are cross-correlated. For example, the time difference of arrivals at the respective receivers is determined based on the generated signals. It will be appreciated that piezoelectric detectors may be used for implementing the receivers. In this way and electric signal may be generated when an acoustic wave from the source reaches the receiver.

These and other aspects of the invention will be discussed with reference to drawings wherein like reference signs correspond to like elements. It will be appreciated that the drawings are presented for illustrative purposes only and may not be used for limiting the scope of the appended claims.

### BRIEF DESCRIPTION OF THE DRAWINGS

Figure 1 presents in a schematic way an embodiment of a system according to the invention.
Figure 2 presents in a schematic way a further embodiment of a system according to the invention.
Figure 3 presents in a schematic way a still further embodiment of a system according to the invention.
Figure 4 presents in a schematic way an embodiment of a pictorial representation of a correlation and a correlogram.
Figure 5 presents schematically an embodiment of a direction of an acoustic source relative to a pair of receivers.
Figure 6 presents schematically an embodiment of the system according to the invention comprising three receivers.
Figure 7 presents schematically an embodiment of a method according to the invention.
Figure 8 presents schematically a further embodiment of a method according to the invention.
Figure 9 presents in a schematic way a still further embodiment of the method according to the invention.
Figure 10 presents in a schematic way a still further embodiment of a method according to the invention.

### DETAILED DESCRIPTION OF THE DRAWINGS

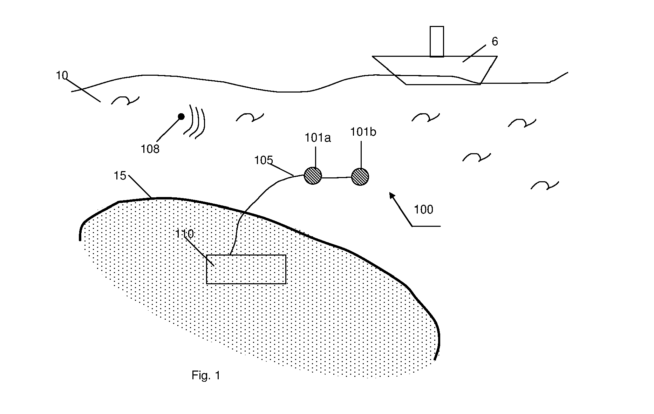

Figure 1 presents in a schematic way an embodiment of a system according to the invention, wherein a water area 10 is monitored using an acoustic monitoring system 100 according to an aspect of the invention. In this particular embodiment the system 100 comprises two receivers 101a, 101b, such as hydrophones, which are deployed in water 10 using a suitable cable 105. The acoustic signals sensed by the receivers may be digitized and transmitted to an acoustic processor 110 which may be arranged to analyze the corresponding signals for detecting a presence of an acoustic source and to determine the direction to the acoustic source. An exemplary embodiment of a suitable acoustic source may be a boat 6. The processor 110 may be arranged on a shore 15. Alternatively, the processor 110 may be arranged under water. Signal transmission from the receivers 101a, 101b to the processor 110 may be implemented using an electrical cable, fiber optics or by means of radio transmission.

The system 100 may further comprise an acoustic beacon 108 for improving accuracy of determination of the direction to the source 6. The operation of the acoustic beacon will be explained in more details below.

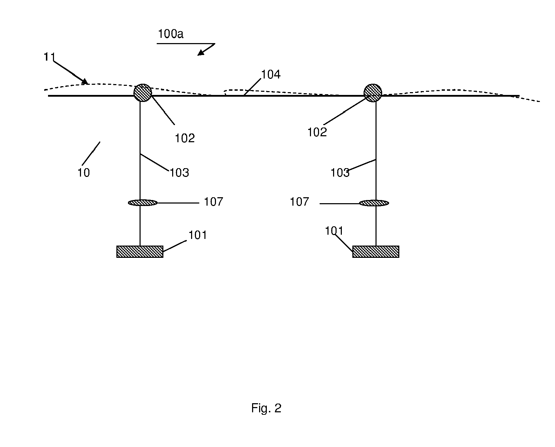

Figure 2 presents in a schematic way a further embodiment of a system 100a according to the invention. In this particular embodiment each receiver 101, such as a hydrophone is hanging on a cable 103 that is arranged to provide both the mechanical connection with the rest of the acoustic monitoring system 100a and the means for transmission of the signal generated by the receivers 101. The cable 103 may be attached to a float 102 which may be maintained in its position using a further cable 104. The system 100a may further comprise motion sensors 107, which may be placed at different positions. Preferably, the sensors 107 are placed on the cable 103 or are directly attached to the receivers 101. The water surface is schematically given by item 11.

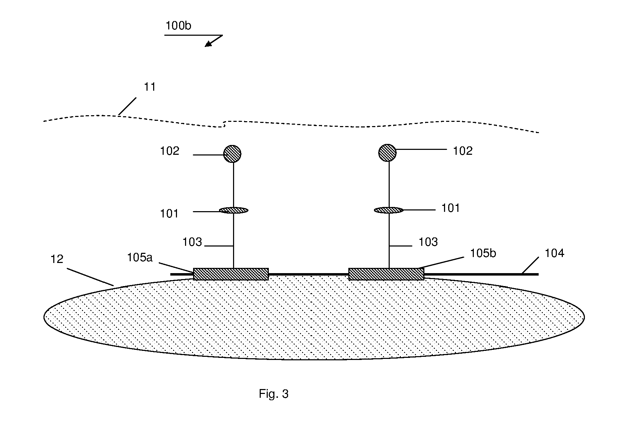

Figure 3 presents in a schematic way a still further embodiment of a system according to the invention. The system 100b comprises the cable 103 attached to each receiver 101 and to the bottom 12 using a mooring means 105a, 105b. Additionally a line 104 may be provided. The cable 103 may be kept in tension using suitable submerged floats 102. The water surface is schematically given by item 11.

In accordance with the invention, the systems as are schematically depicted in Figures 1 - 3 operate using the time difference of arrival (TDOA) of the acoustic signals as measured by a pair of receivers 101. The TDOA can be measured using conventional signal processing techniques, such as cross-correlation or the generalized cross-correlation (GCC). At a given frequency, the different times of arrival on the receivers 101 lead to phase differences that can be analyzed using beam forming and eigen decomposition methods, such as MVDR or MUSIC for estimating the direction of arrival of the acoustic waves.

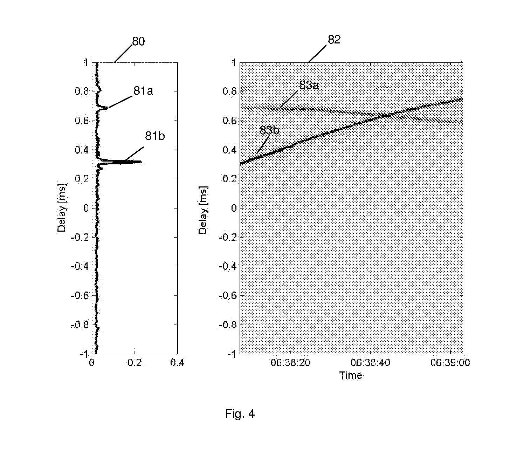

Figure 4 presents in a schematic way an embodiment of a pictorial representation of a correlation and a correlogram. The plot 80 presents a GCC exhibiting two peaks 81a, 81b that demonstrate the presence of two acoustic sources. The acoustic sources are detected at delays that depend on their direction with respect to a pair of receivers.

In plot 82, GCC as in plot 80 computed for successive time intervals are stacked to form an image that shows the content of the GCC as a function of time and delay. In this interpretation, referred to as a correlogram, the persistent acoustic sources are associated with lines 83a, 83b that indicate the evolution of the source direction as a function of time. Accordingly, lines 83a, 83b illustrate evolution of the peaks 81a, 81b shown in plot 80.

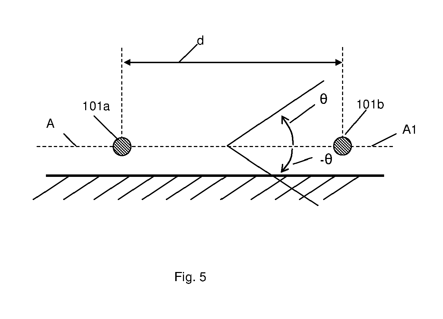

The relationship between the TDOA and the direction θ of the acoustic source is given by:
cos(θ) = TDOA * c / d, wherein
c is the speed of sound
d is the distance between the receivers;
θ is that angle defined in Figure 5.

Figure 5 presents schematically an embodiment of a direction of an acoustic source relative to a pair of receivers. In this particular embodiment two receivers 101a, 101b have a mutual distance d. However, when resolving the above equation, there are two directions of opposite sign which may be considered as a solution. Accordingly, one direction is a true direction and another direction is a ghost direction.

In order to resolve the equation, pre-knowns, such as topological considerations may be taken into account for discriminating between the true direction and the ghost direction. For example, when it is known that one direction corresponds to an in-land direction, it may be ignored as being the ghost direction.

Alternatively, this ambiguity may be resolved using a third receiver which does not align along the hypothetical line A-A1 with the pair of receivers 101a, 101b. Such additional receiver (not shown) may be used for forming alternative pairs either with the receiver 101a, or with the receiver 101b. Such approach is sufficient for resolving between the true direction to the source and the ghost direction, because the true direction will be substantially the same for all thus formed pairs.

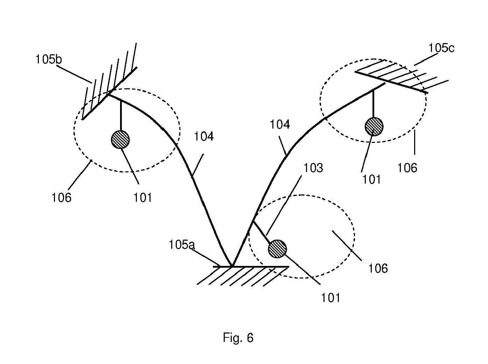

Figure 6 presents schematically an embodiment of the system according to the invention comprising three receivers. In this exemplary embodiment flexible structures 104, such as cables, may be used for supporting each receiver 101. The cables may run between suitable supports 105a, 105b, 105c. Preferably, each receiver is constrained to dwell within the vicinity 106 of its rest position. The relative vicinities 106 of the three receivers do not allow their alignment along a single straight line. Accordingly, by forming two or three pairs of receivers for carrying out the TDOA analysis the true direction to the acoustic source (not shown) may be determined.

Given that the bearing ambiguity is related to the geometric arrangement of the receivers and not to the signal processing method, it will be appreciated that the above considerations on the bearing ambiguity hold true even if a beam forming or eigen decomposition method is used instead of GCC.

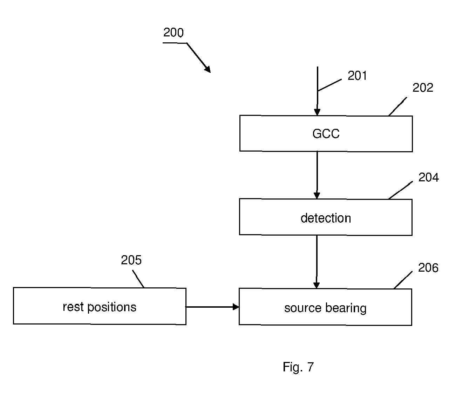

Figure 7 presents schematically an embodiment of a method 200 according to the invention. In this particular embodiment, for each pair of receivers, the signals are analyzed using the generalized cross-correlation (GCC) (step 202) of acoustic signals 201 arrived at individual receivers. In step 204, the detection of corresponding peaks in the GCC is carried out. The delay of each peak corresponds to the TDOA of a detected acoustic source, as has been explained with reference to Figure 4. Accordingly, the acoustic processor forming part of the system according to the invention may be arranged to output TDOA.

At step 206 the direction of the detected acoustic source is computed, based on the computed TDOA supplied by the processor 204 together with the knowledge on the position of the receivers 205.

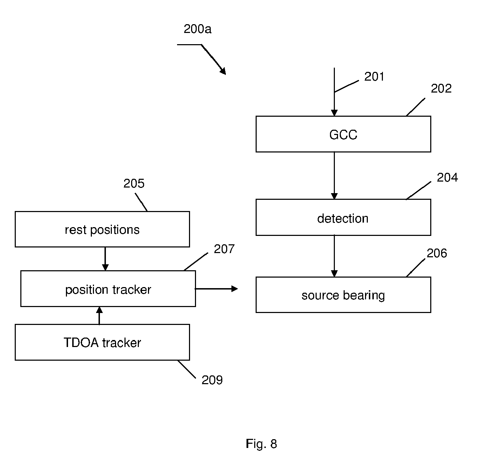

Figure 8 presents schematically a further embodiment 200a of a method according to the invention. In this particular embodiment a parallel branch is added in data processing for tracking the position of the receivers using the detected acoustic sources. Accordingly, after computation of GCC and extraction of peaks, the TDOA of the detected acoustic sources are fed to a tracker 209 that is arranged to track the temporal evolution of the TDOA of the detected sources. Part of the evolution of the TDOA of a given source is due to the source motion, another part corresponds to the motion of the receivers.

For example, for a static source, the measured TDOA is constant in absence of the receiver motion. If the receiver oscillates, the measured TDOA will oscillate around the TDOA that would otherwise be measured by a static receiver. Analysis of these oscillations by the receiver position tracker enables estimation of the receiver position and can be used to yield more accurate direction estimates than in case when it is assumed that the receivers are non-displaceable.

Accordingly, the evolution of the TDOA provided at step 209 is analyzed in step 207 to determine the position of the evolution of the receiver positions around their rest positions 205 and can be used for calculating the direction to the acoustic source in step 206.

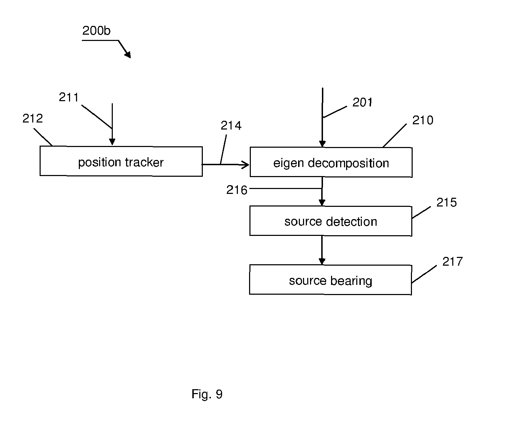

Figure 9 presents in a schematic way a still further embodiment of a method according to the invention. In this embodiment operational steps 200b of the signal processor are explained. Data from the motion sensors 211, as explained with reference to Figure 2, for example, is processed by the position tracker 212 and is fed as input 214 into a module 210 for computation of the source bearing based on the position of the receivers and the acoustic signals 201. When the eigen decomposition method is used instead of GCC the result may be a function of the direction, for example a directional power distribution 216. Accordingly, the source direction is determined at steps 215, 217 based on peaks present in the direction curve.

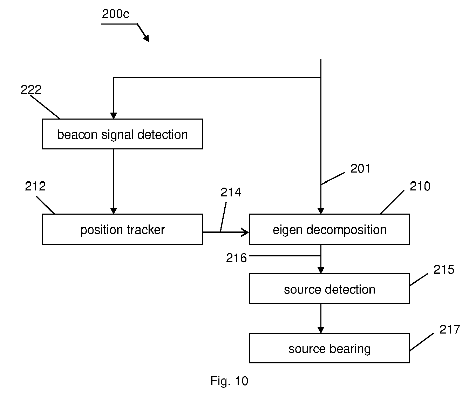

Figure 10 presents in a schematic way a still further embodiment 200c of a method according to the invention. In this embodiment a further mode of operation of the data processor is explained. For example, in the method according to the invention an acoustic beacon may be used for measuring the actual position of the receivers. The acoustic beacon usually emits a known signal that is sensed by the hydrophones 101 along with the signal from the acoustic source. That known signal is detected on the acoustic signals 201 at step 222. The detections of the beacon know signal are used in step 212 to determine the actual position of the receivers. The determined receiver's position is fed as input 214 in the data processing routine as is explained with reference to Figure 9.

It will be appreciated that the acoustic source detection routine may be suitably adapted to minimize interference with the signal form the beacon.

Summarizing, measuring of the actual position of the receivers is found to be advantageous for improving accuracy of the source direction estimation. In addition, because the actual position of the receivers may be determined and tracked in time, it is not necessary to rigidly affix the receivers in space, which reduces the system and maintenance costs substantially.

While specific embodiments have been described above, it will be appreciated that the invention may be practiced otherwise than as described. Moreover, specific items discussed with reference to any of the isolated drawings may freely be inter-changed supplementing each other in any particular way. The descriptions above are intended to be illustrative, not limiting. Thus, it will be apparent to one skilled in the art that modifications may be made to the invention as described in the foregoing without departing from the scope of the claims set out below.

## Claims

1. An acoustic monitoring system comprising at least two isolated acoustic receivers for receiving acoustic signals from an acoustic source, such as hydrophones, capable of spatial displacement, a detector for detecting signals from the said receivers and a processing system for processing the detected signals for determining a spatial position of the said receivers.

2. The system according to claim 1, wherein the processing system is further arranged to determine a direction or a position of the acoustic source using the determined spatial position of the receivers.

3. The system according to claim 1 or 2, wherein the at least two isolated acoustic receivers form a flexible structure.

4. The system according to claim 1, 2 or 3, wherein the at least two isolated acoustic receivers are mounted on a cable.

5. The system according to claim 4, wherein the cable is provided with a limiter for minimizing the spatial displacement of the said sources.

6. The system according to any one of the preceding claims, wherein the said receivers are provided with respective associated position measuring devices.

7. The system according to claim 6, wherein for the position measuring device a motion sensor, an accelerometer or a beacon is used.

8. The system according to claim 7, wherein the processing system is adapted to address a motion model representative of the said spatial displacement.

9. The system according to any one of the preceding claims, comprising at least three isolated acoustic receivers.

10. The system according to any one of the preceding claims, further comprising a tracker for recording the determined actual spatial positions of the receivers.

11. The system according to any one of the preceding claims, wherein hydrophones are used for the said receivers.

12. A method of acoustic monitoring using a system comprising at least two isolated acoustic receivers capable of spatial displacement, the method comprising the steps of:
- generating signals by the said receivers pursuant to detected acoustic signals of an acoustic source;
- processing the generated signals for determining a spatial position of the said receivers.

13. The method according to claim 12, further comprising the step of determining a spatial position or a direction to the acoustic source using the generated signals.

14. The method according to claim 12 or 13, wherein the generated signals are cross-correlated.
